# DEMANDE DE BREVET EUROPEEN

(11) **EP 4 520 733 A1**
(43) Date de publication de la demande: **12.03.2025**
(21) Numéro de dépôt: 23196100.4
(22) Date de dépôt: 07.09.2023
(51) Int. Cl.: C02F 3/28, C02F 3/32, C02F 3/34, C02F 101/10, C02F 101/16, C02F 103/10

(54) **PROCÉDÉ DE TRAITEMENT DE L'EAU D'EXHAURE ISSUE DES TRAVAUX SOUTERRAINS**

(71) Demandeur: Eiffage GC Infra Linéaires, 78140 Vélizy-Villacoublay (FR)
(72) Inventeur: BOULANGE, Laurence, 38530 Chapareillan (FR); DOOM, Florian, 77144 Montévrain (FR); BENJEMAA, Myriam, 93440 Dugny (FR); DA CRUZ GOMES, Marina, 93047 Montfermeil (FR); DOUMBIA, Masséré, 94360 Bry-sur-Marne (FR)
(74) Mandataire: Plasseraud IP

(57) **Abrégé**

La présente invention concerne un procédé de traitement de l'eau d'exhaure issue de travaux souterrain, ladite eau d'exhaure comprenant un composé nitrite, un composé nitrate, un composé sulfate ou leurs combinaisons.

## Description

La présente invention concerne un procédé de traitement de l'eau d'exhaure issue des travaux souterrains.

### Contexte de l'invention

Le creusement de tunnel dans le cadre de travaux souterrains est une pratique courante. Il génère de l'eau qui s'accumule ou s'écoule naturellement dans les galeries et les puits de creusement dans le cadre de travaux souterrains. Cette eau est ensuite pompée ou évacuée pour maintenir le site sec et éviter les inondations. En fonction des dimensions du site, les débits d'eau évacuée peuvent dépasser 100 000 m³ par jour.

Cette eau est communément appelée eau d'exhaure. Cette eau d'exhaure peut être de l'eau naturellement présente dans la roche à creuser, de l'eau utilisée pour le bon fonctionnement d'un tunnelier mis en oeuvre dans la technique de creusement de tunnel mécanique, de l'eau générée *in-situ* par la technique de creusement de tunnel par explosif ou leurs mélanges.

L'eau naturellement présente dans la roche peut provenir d'une nappe phréatique et/ou d'une source naturelle. Cette eau peut être extraite de la roche lors du creusement de tunnel et doit donc être évacuée.

Le tunnelier, mis en oeuvre dans la technique mécanique, comprend une roue de coupe tournante qui assure l'abattage de la roche à creuser. Lors de l'abattage de la roche, la roue de coupe tournante chauffe. Pour limiter cette chauffe, la roue de coupe tournante peut être refroidie grâce à de l'eau. Cette eau, qui est utilisée pour le bon fonctionnement du tunnelier mis en oeuvre dans la technique de creusement de tunnel mécanique, doit ensuite être évacuée.

La technique de creusement de la roche par explosif utilise généralement des explosifs à base de nitrate d'ammonium sont utilisés (NH₄NO₃). La réaction d'explosion du nitrate d'ammonium est donnée par :

*NH₄NO₃* → *N₂O* + *2H₂O.*

Cette réaction étant incomplète, le nitrate d'ammonium non consommé s'ionise dans l'eau de la réaction en ammoniaque (NH₄⁺) et en nitrate (NO₃⁻) :

*NH₄NO₃* → *NH₄⁺* + *NO₃⁻*

*NH₄* + *OH-* → *NH_{3(gaz)}*

*NO₃⁻* + *2H⁺* + 2e- → *NO₂⁻* + *H₂O*

De plus, l'ammoniac gazeux formé lors de la réaction peut réagir avec du monoxyde de carbone issu de l'explosion pour former de l'urée (CO(NH₂)₂) selon la réaction :

*2 NH_{3(gaz)}* + CO *_{(gaz)}* → *(CO(NH₂)₂)* + *H₂O*

La combustion incomplète des explosifs génère donc *in-situ* d'une eau à évacuer comprenant des composés azotés (nitrites et nitrates).

En plus des composés azotés, l'eau d'exhaure peut comprendre des sulfates. En effet, des tunnels peuvent être creusés dans des zones rocheuses contenant des formations à base de sulfates (comme le gypse), et la température élevée (50°C) des roches creusées entraine une lixiviation accrue des sulfates dans l'eau d'exhaure.

Rejeter l'eau d'exhaure ayant une teneur élevée en composés azotés, nitrates et nitrites, et en sulfates directement dans le milieu aquatique contribue à la pollution de l'eau dont les conséquences peuvent être délétères. En effet, une teneur trop élevée en composés azotés dans un milieu aquatique induit une toxicité sur sa faune et sa flore, déséquilibre l'écosystème aquatique et nuit à la biodiversité. De plus, une teneur trop élevée en sulfates rend l'eau impropre à la consommation humaine. Ainsi, des réglementations environnementales imposent une surveillance des teneurs en composés azotés et sulfate dans l'eau d'exhaure.

C'est pourquoi il est nécessaire de réduire la quantité de composés azotés, nitrates et nitrites, et des sulfates dans l'eau d'exhaure avant de la rejeter dans le milieu naturel.

Des traitements de dénitrification, tels que l'échange d'ions, l'osmose inverse et l'électrodialyse, sont connus. Ils ont les inconvénients d'avoir un coût élevé lié à leur maintenance, une mise en place qui peut être très longue, de générer des boues ou éluats qui doivent être évacués. De plus, ces traitements requièrent une emprise au sol importante pourtraiter les débits élevés d'eau d'exhaure alors que les chantiers se trouvent très souvent implantés dans des zones géographiques à très fortes contraintes (zone urbaine, vallée montagneuse) et génère une pollution visuelle.

Des traitements de désulfatation sont également connus. On peut citer, par exemple, la percolation au-travers d'un lit de résines échangeuses d'ions, la filtration sur des membranes de nano-filtration ou l'osmose inverse. La percolation présente des inconvénients, notamment une consommation importante de réactifs chimiques et la production d'éluats de régénération salins qui doivent être évacués. L'inconvénient majeur de la filtration et de l'osmose inverse réside dans la production d'un concentrat de filtration qui représente une importante fraction du débit de l'eau d'exhaure à traiter (de l'ordre de 10 à 30%) et qui doit être traité avant d'être évacué. De plus, comme les traitements de nitrification, les traitements de désulfatation ont un coût élevé lié à la maintenance, et génère une pollution visuelle car requièrent une emprise au sol importante pour traiter les débits élevés d'eau d'exhaure incompatible avec la localisation des chantiers.

Il existe donc un besoin d'un procédé économique permettant de traiter efficacement une très grande quantité d'eau d'exhaure afin de minimiser l'impact environnemental lors du rejet de cette eau d'exhaure dans le milieu naturel, qui puisse être mis en oeuvre sur le site d'un chantier de travaux souterrains, qui ne génère pas de déchets et ne génère pas de pollution visuelle.

### Bref exposé de l'invention

De façon surprenante, les inventeurs ont développé un procédé qui répond à ce besoin.

Ainsi, selon un premier aspect, la présente divulgation porte sur un procédé de traitement d'une eau d'exhaure comprenant un composé nitrite, un composé nitrate, un composé sulfate ou leurs combinaisons,
ledit procédé comprenant l'étape suivante:
(a) mise en contact de l'eau d'exhaure avec une bactérie dénitrifiante pour obtenir une eau d'exhaure comprenant une concentration réduite en composé nitrite, composé nitrate ou leurs combinaisons,
(b) mise en contact de l'eau d'exhaure avec une plante phytoépuratrice pour obtenir une eau d'exhaure comprenant une concentration réduite en composé sulfate, ou
   une combinaison des étapes (a) et (b) pour obtenir une eau d'exhaure comprenant une concentration réduite en composé nitrite, composé nitrate ou leurs combinaisons et une concentration réduite en composé sulfate.

De façon avantageuse, l'étape (a) du procédé selon l'invention permet de réduire efficacement les concentrations en composé nitrite, en composé nitrate ou leurs combinaisons en dessous des seuils imposés par les réglementations. L'étape (b) du procédé selon l'invention permet de réduire efficacement la concentration en composé sulfate dans l'eau d'exhaure en dessous des seuils imposés par les réglementations.

En effet, au cours de l'étape (a), la bactérie dénitrifiante va permettre la réduction des composés nitrite et nitrate en azote gazeux afin de diminuer efficacement la concentration en composé nitrite et en composé nitrate dans l'eau d'exhaure en dessous des seuils imposés par les réglementations.

Sans vouloir être liés par aucune théorie, les inventeurs sont d'avis que les ions nitrates sont préalablement convertis en ions nitrites selon l'équation chimique ci-dessous et que les ions nitrites issus de cette conversion et présents dans l'eau d'exhaure sont utilisés par la bactérie dénitrifiante pour effectuer son métabolisme.

Equation chimique de conversion des ions nitrates *NO₃*⁻ en ion nitrites *NO₂*⁻:

*NO₃⁻* + *2H⁺* + *2e⁻* → *NO₂⁻* + *H₂O*

Sans vouloir être liés par aucune théorie, les inventeurs sont d'avis que, au cours de l'étape (b), la plante phytoépuratrice va absorber le composé sulfate pour favoriser sa croissance. Ainsi, la plante phytoépuratrice va permettre de diminuer efficacement la concentration en composé sulfate dans l'eau d'exhaure en dessous des seuils imposés par les réglementations.

De plus, le procédé selon l'invention a l'avantage d'une exploitation simple et économique. En effet le procédé ne requière aucun équipement complexe à mettre en oeuvre et présente un cout de maintenance extrêmement faible.

Le procédé peut aussi être réalisé directement sur le site du chantier. En effet, les étapes (a) et (b) peuvent être mis en oeuvre dans des bassins présentant de faibles dimensions malgré le débit élevé d'eau d'exhaure à traiter.

Le procédé selon l'invention a l'avantage d'être respectueux de l'environnement. En effet, en plus de permettre une réduction efficace de la concentration en composé nitrite, en composé nitrate et en composé sulfate, le procédé de la présente invention ne met pas en oeuvre de réactifs chimiques et de technologies énergivore. Il peut également mettre en oeuvre lors de l'étape (b) des plantes endémiques au lieu du chantier.

Le procédé selon l'invention a également l'avantage de ne pas générer de la pollution visuelle car il ne nécessite pas une importante prise au sol et la mise en place d'installation massive de traitement de l'eau d'exhaure.

### Brève description des Figures

D'autres caractéristiques, détails et avantages apparaîtront à la lecture de la description détaillée ci-après, et à l'analyse du dessin annexé, sur lequel :
Fig. 1

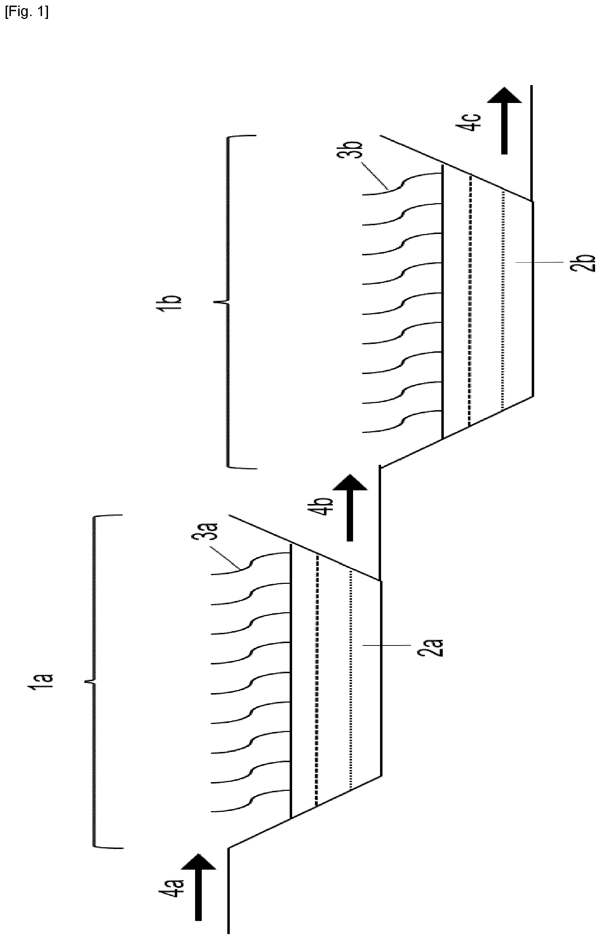

[Fig. 1] représente un mode de réalisation du procédé de l'invention mettant en oeuvre des bassins positionnés en escalier comprenant un substrat multicouche adapté aux plantes phytoépuratrices émergées.

### Description détaillée de l'invention

Selon un premier aspect, la présente divulgation porte sur un procédé de traitement d'une eau d'exhaure comprenant un composé nitrite, un composé nitrate, un composé sulfate ou leurs combinaisons,
ledit procédé comprenant l'étape suivante:
(a) mise en contact de l'eau d'exhaure avec une bactérie dénitrifiante pour obtenir une eau d'exhaure comprenant une concentration réduite en composé nitrite, composé nitrate ou leurs combinaisons,
(b) mise en contact de l'eau d'exhaure avec une plante phytoépuratrice pour obtenir une eau d'exhaure comprenant une concentration réduite en composé sulfate, ou
   une combinaison des étapes (a) et (b) pour obtenir une eau d'exhaure comprenant une concentration réduite en composé nitrite, composé nitrate, composé sulfate ou leurs combinaisons.

Au sens de la présente demande, le terme "eau d'exhaure" désigne de l'eau à évacuer d'un chantier de travaux souterrains. Par exemple, l'eau d'exhaure peut être de l'eau naturellement présente dans la roche à creuser et extraite de cette roche à creuser, de l'eau générée *in-situ* par la technique de creusement de tunnel par explosif, de l'eau utilisée pour le bon fonctionnement d'un tunnelier mis en oeuvre dans la technique mécanique de creusement de tunnel ou leurs mélanges.

Au sens de la présente demande, le terme "composé nitrite" désigne tout composé chimique contenant l'anion nitrite NO₂⁻. Typiquement, le composé nitrique peut être choisi parmi le Nitrite de sodium (NaNO₂), Nitrite de potassium (KNO₂), Nitrite de calcium (Ca(NOz)z), Nitrite de magnésium (Mg(NOz)z), Nitrite de fer(ll) (Fe(NOz)z), Nitrite de fer(lll) (Fe(NO₂)₃), Nitrite de cuivre(I) (CuNOz), Nitrite de cuivre(II) (Cu(NOz)z), Nitrite de plomb(ll) (Pb(NOz)z), Nitrite de cobalt(ll) (Co(NOz)z), Nitrite de nickel(ll) (Ni(NOz)z), Nitrite de zinc (Zn(NOz)z), Nitrite de baryum (Ba(NOz)z), Nitrite de strontium (Sr(NOz)z), Nitrite de manganèse(ll) (Mn(NOz)z), Nitrite de cadmium (Cd(NOz)z), Nitrite de mercure(ll) (Hg(NOz)z), Nitrite d'ammonium (NH₄NO₂), et Nitrite de lithium (LiNO₂), en particulier choisi parmi Nitrite de sodium (NaNO₂), Nitrite de potassium (KNO₂), Nitrite de calcium (Ca(NOz)z), Nitrite de magnésium (Mg(NOz)z), Nitrite de fer(ll) (Fe(NOz)z), Nitrite de fer(lll) (Fe(NO₂)₃), Nitrite de cuivre(I) (CuNO₂), Nitrite de cuivre(II) (Cu(NOz)z), Nitrite de plomb(ll) (Pb(NOz)z), Nitrite de cobalt(ll) (Co(NOz)z), Nitrite de nickel(ll) (Ni(NO₂)₂), Nitrite de zinc (Zn(NO₂)₂), Nitrite de baryum (Ba(NOz)z), Nitrite de strontium (Sr(NOz)z), Nitrite de manganèse(Il) (Mn(NOz)z), Nitrite d'ammonium (NH₄NO₂) et leurs mélanges.

Au sens de la présente demande, le terme "composé nitrate" désigne tout composé chimique contenant l'anion nitrate NO₃⁻. Typiquement, le composé nitrite peut être choisi parmi le Nitrate de sodium (NaNO₂), Nitrate de potassium (KNO₂), Nitrate de calcium (Ca(NOz)z), Nitrate de magnésium (Mg(NOz)z), Nitrate de fer(ll) (Fe(NOz)z), Nitrate de fer(lll) (Fe(NO₂)₃), Nitrate de cuivre(I) (CuNOz), Nitrate de cuivre(ll) (Cu(NOz)z), Nitrate de plomb(ll) (Pb(NOz)z), Nitrate de cobalt(ll) (Co(NO₂)₂), Nitrate de nickel(ll) (Ni(NOz)z), Nitrate de zinc (Zn(NOz)z), Nitrate de baryum (Ba(NOz)z), Nitrate de strontium (Sr(NOz)z), Nitrate de manganèse(ll) (Mn(NOz)z), Nitrate de cadmium (Cd(NOz)z), Nitrate de mercure(ll) (Hg(NOz)z), Nitrate d'ammonium (NH₄NO₂), et Nitrate de lithium (LiNO₂), en particulier choisi parmi Nitrate de sodium (NaNO₂), Nitrate de potassium (KNO₂), Nitrate de calcium (Ca(NOz)z), Nitrate de magnésium (Mg(NOz)z), Nitrate de fer(ll) (Fe(NOz)z), Nitrate de fer(lll) (Fe(NO₂)₃), Nitrate de cuivre(I) (CuNO₂), Nitrate de cuivre(II) (Cu(NOz)z), Nitrate de plomb(ll) (Pb(NOz)z), Nitrate de cobalt(ll) (Co(NOz)z), Nitrate de nickel(ll) (Ni(NO₂)₂), Nitrate de zinc (Zn(NO₂)₂), Nitrate de baryum (Ba(NOz)z), Nitrate de strontium (Sr(NOz)z), Nitrate de manganèse(ll) (Mn(NOz)z), Nitrate d'ammonium (NH₄NO₂) et leurs mélanges.

Typiquement, la concentration en composé nitrite, composé nitrate ou leurs combinaisons dans l'eau d'exhaure mise en oeuvre dans l'étape (a) est comprise de 0,5 à 25 mg/L, en particulier de 5 à 20 mg/L, tout particulièrement de 10 à 15 mg/L.

Au sens de la présente demande, le terme "bactérie dénitrifiante" désigne une bactérie qui utilise l'ion nitrite pour effectuer son métabolisme.

De façon avantageuse, la mise en contact de l'eau d'exhaure avec une bactérie dénitrifiante lors de l'étape (a) permet d'obtenir une eau d'exhaure comprenant une concentration réduite en composé nitrite, composé nitrate ou leurs combinaisons avant son rejet en milieu naturel, ce qui permet d'éviter une accumulation excessive de nitrates dans l'eau pouvant être préjudiciable pour l'écosystème et la qualité de l'eau.

Le genre de la bactérie dénitrifiante peut être choisi parmi les genres bactériens *Agrobacterium, Alcaligenes, Aquaspirillum, Azospirillum, Bradyrhizobium, Chromobacterium, Comamonas, Cytophaga, Flavobacterium, Flexibacter, Halobacterium, Haloferax, Hyphomicrobium, Janthinobacterium, Kingella, Neisseria, Ochrobactrum, Paracoccus, Pasteurella, Propionibacterium, Pseudomonas, Rhizobium, Rhodobacter, Roseobacter, Thiobacillus, Thiosphaera, Wolinella, Bacillus* et leurs combinaisons.

Dans le genre bactérien *Agrobacterium,* les espèces *Agrobacterium radiobacter, Agrobacterium tumefaciens* et leurs mélanges sont particulièrement adaptés à l'étape (a).

Dans le genre bactérien *Alcaligenes,* les espèces *Alcaligenes denitrificans, Alcaligenes eutrophus, Alcaligenes faecalis* et leurs mélanges sont particulièrement adaptés à l'étape (a).

Dans le genre bactérien *Aquaspirillum,* les espèces *Aquaspirillum magnetotacticum, Aquaspirillum itersonii, Aquaspirillum psychrophillum* et leurs mélanges sont particulièrement adaptés à l'étape (a).

Dans le genre bactérien *Azospirillum,* les espèces *Azospirillum brasilense, Azospirillum lipoferum* et leurs mélanges sont particulièrement adaptés à l'étape (a).

Dans le genre bactérien *Bradyrhizobium,* l'espèce *Bradyrhizobium japonicum* est particulièrement adaptée à l'étape (a).

Dans le genre bactérien *Chromobacterium,* l'espèce *Chromobacterium violaceum* est particulièrement adaptée à l'étape (a).

Dans le genre bactérien *Comamonas,* l'espèce *Comamonas testosteroni* est particulièrement adaptée à l'étape (a).

Dans le genre bactérien *Cytophaga,* l'espèce *Cytophaga johnsonae* est particulièrement adaptée à l'étape (a).

Dans le genre bactérien *Flavobacterium,* l'espèce *Flavobacterium balustinum* est particulièrement adaptée à l'étape (a).

Dans le genre bactérien *Flexibacter,* l'espèce *Flexibacter canadensis* est particulièrement adaptée à l'étape (a).

Dans le genre bactérien *Halobacterium,* les espèces *Halobacterium marismortui, Halobacterium vallismortis* et leurs mélanges sont particulièrement adaptées à l'étape (a).

Dans le genre bactérien *Haloferax,* l'espèce *Haloferax denitrificans* est particulièrement adaptée à l'étape (a).

Dans le genre bactérien *Hyphomicrobium,* l'espèce *Hyphomicrobium vulgare* est particulièrement adaptée à l'étape (a).

Dans le genre bactérien *Janthinobacterium,* l'espèce *Janthinobacterium lividum* est particulièrement adaptée à l'étape (a).

Dans le genre bactérien *Kingella,* l'espèce *Kingella denitrificans* est particulièrement adaptée à l'étape (a).

Dans le genre bactérien Neisseria, les espèces *Neisseria denitrificans, Neisseria elongata, Neisseria flavescens, Neisseria lactanica, Neisseria mucosa, Neisseria sicca, Neisseria subflava* et leurs mélanges sont particulièrement adaptés à l'étape (a).

Dans le genre bactérien *Ochrobactrum,* l'espèce *Ochrobactrum anthropi* est particulièrement adaptée à l'étape (a).

Dans le genre bactérien *Paracoccus,* les espèces *Paracoccus denitrificans, Paracoccus halodenitrificans* et leurs mélanges sont particulièrement adaptés à l'étape (a).

Dans le genre bactérien *Pasteurella,* l'espèce *Pasteurella multocida* est particulièrement adaptée à l'étape (a).

Dans le genre bactérien *Propionibacterium,* l'espèce *Propionibacterium acidi-propionici* est particulièrement adaptée à l'étape (a).

Dans le genre bactérien *Pseudomonas,* les espèces *Pseudomonas putida, Pseudomonas aeruginosa, Pseudomonas mallei, Pseudomonas alcaligenes, Pseudomonas aureofaciens, Pseudomonas caryopltylli, Pseudomonas chlororapltis, Pseudomonas denitrificans, Pseudomonas fluorescens, Pseudomonas lemoignei, Pseudomonas mendocina, Pseudomonas nautica, Pseudomonas picketti, Pseudomonas pseudoalcaligenes, Pseudomonas pseudomallei, Pseudomonas solonacearum, Pseudomonas stutzeri* et leurs mélanges, plus particulièrement *l'espèce Pseudomonas putida,* sont particulièrement adaptés à l'étape (a).

Dans le genre bactérien *Rhizobium,* les espèces *Rhizobium leguminosarum, Rhizobium meliloti, Rhizobium phaseoli, Rhizobium japonicum, Rhizobium trifolii* et leurs mélanges, plus particulièrement les espèces *Rhizobium phaseoli, Rhizobium japonicum, Rhizobium trifolii* et leurs mélanges, sont particulièrement adaptés à l'étape (a).

Dans le genre bactérien *Rhodobacter,* l'espèce *Rhodobacter sphaeroides* est particulièrement adaptée à l'étape (a).

Dans le genre bactérien *Roseobacter,* l'espèce *Roseobacter denitrificans* est particulièrement adaptée à l'étape (a).

Dans le genre bactérien *Thiobacillus,* les espèces *Thiobacillus denitrificans, Thiobacillus novellus, Thiobacillus versutus* et leurs mélanges sont particulièrement adaptées à l'étape (a).

Dans le genre bactérien *Thiosphaera,* l'espèce *Thiosphaera pantotropha* est particulièrement adaptée à l'étape (a).

Dans le genre bactérien *Wolinella,* l'espèce *Vllolinella succinogenes* est particulièrement adaptée à l'étape (a).

Parmi les bactéries du genre *Bacillus,* les espèces *Bacillus amyloliquefaciens, Bacillus velezensis, Bacillus australimaris, Bacillus pumilus, Bacillus safensis, Bacillus zhangzhouensis, Bacillus licheniformis, Bacillus subtilis, Bacillus megaterium, Bacillus cereus* et leurs mélanges, plus particulièrement les espèces *Bacillus amyloliquefaciens, Bacillus velezensis, Bacillus australimaris, Bacillus pumilus, Bacillus safensis, Bacillus zhangzhouensis* et leurs mélanges sont particulièrement adaptées à l'étape (a).

De façon avantageuse, les bactéries dénitrifiantes du genre *Bacillus* ne sont pas pathogènes pour l'homme, ne sont pas dangereuses pour l'environnement et sont très faciles à développer. Ainsi, une grande quantité de ces bactéries dénitrifiantes peut facilement être utilisée, ce qui permet d'augmenter la productivité du procédé de la présente invention.
Les bactéries dénitrifiantes du genre *Bacillus* sont également très résistantes. La durée entre chaque remplacement de ces bactéries peut donc être très espacée ce qui, là aussi, permet d'augmenter la productivité du procédé de la présente invention.

La bactérie dénitrifiante peut être un mélange comprenant *Bacillus amyloliquefaciens, Bacillus velezensis, Bacillus australimaris, Bacillus pumilus, Bacillus safensis, Bacillus zhangzhouensis, Bacillus licheniformis, Bacillus subtilis, Bacillus thuringiensis, Bacillus cereus, Bacillus megaterium* et *Bacillus cereus,* plus particulièrement un mélange comprenant *Bacillus amyloliquefaciens, Bacillus velezensis, Bacillus australimaris, Bacillus pumilus, Bacillus safensis,* et *Bacillus zhangzhouensis.*

Ce mélange peut comprendre :
- de 55% à 95% en nombre, en particulier de 60% à 90% en nombre, plus particulièrement de 70% à 80% en nombre de *Bacillus amyloliquefaciens* et de *Bacillus velezensis,* et
- de 5% à 45% en nombre, en particulier de 10% à 40% en nombre, plus particulièrement de 20% à 30% en nombre de *Bacillus amyloliquefaciens, Bacillus velezensis, Bacillus australimaris, Bacillus pumilus, Bacillus safensis,* et *Bacillus zhangzhouensis.*

De façon avantageuse, la diminution en composés nitrites et nitrates est particulièrement efficace avec un mélange comprenant les proportions de bactéries dénitrifiantes dans les plages décrites ci-dessus.

La bactérie dénitrifiante peut être une rhizobactérie.

Au sens de la présente demande, le terme "rhizobactérie" désigne une bactérie qui est capable d'effectuer différentes fonctions bénéfiques pour les plantes, telles que la solubilisation du phosphore, la production d'hormones de croissance végétale, la protection contre les pathogènes ainsi que la conversion de l'azote atmosphérique en ammoniac (NH₃) assimilable par les plantes.

La mise en oeuvre de la rhizobactérie lors de l'étape (a) est particulièrement avantageuse lorsque l'étape (a) est combinée à l'étape (b).

En effet, la rhizobactérie peut convertir l'azote gazeux généré par la dénitrification en ammoniac assimilable par la plante phytoépuratrice de l'étape (b). Cet ammoniac contribue à favoriser la croissance de la plante phytoépuratrice, et ainsi d'accroître son activité phytoépuratrice.

En outre, la plante phytoépuratrice de l'étape (b) fournit à la rhizobactérie de l'étape (a) des nutriments essentiels pour sa croissance et son métabolisme, tels que des composés organiques, notamment du carbone, dont les bactéries dénitrifiantes ont besoin pour se développer.

La rhizobactérie et la plante phytoépuratrice établissent ainsi avantageusement une relation symbiotique qui bénéficie à la fois à la rhizobactérie et à la plante phytoépuratrice.

Typiquement, la rhizobactérie peut être choisie parmi les genres *Rhizobium, Bradyrhizobium, Azospirillum, Bacillus, Pseudomonas* et leurs mélanges, plus particulièrement parmi *Bacillus, Pseudomonas* et leurs mélanges.

Typiquement, la rhizobactérie peut être choisie parmi les espèces *Rhizobium leguminosarum, Rhizobium meliloti, Rhizobium phaseoli, Rhizobium japonicum, Rhizobium trifolii, Bradyrhizobium japonicum, Azospirillum lipoferum, Bacillus amyloliquefaciens, Bacillus velezensis, , Bacillus cereus, Bacillus subtilis, Bacillus megaterium, Pseudomonas aeruginosa,* , *Pseudomonas fluorescens, Pseudomonas mendocina, Pseudomonas stutzeri, Pseudomonas putida* et leurs mélanges.

Typiquement, la température de l'eau d'exhaure mise en oeuvre dans l'étape (a) est comprise de 10°C à 50°C, en particulier de 15°C à 45°C, tout particulièrement de 20°C à 40°C.

De façon avantageuse, ces plages de température permettent un fonctionnement efficace l'étape (a) à un cout énergétique optimisé. En effet, la température optimale de fonctionnement, et donc de croissance, des bactéries dénitrifiantes est comprises dans ces plages. De plus, il n'est pas nécessaire de refroidir/réchauffer l'eau d'exhaure avant de la mettre en oeuvre dans l'étape (a) car ces plages comprennent la température ambiante et la température à laquelle l'eau d'exhaure est présente dans la roche.

Lors de l'étape (a), la concentration de bactérie dénitrifiante en contact avec une eau d'exhaure comprenant une concentration en composé nitrite, composé nitrate ou leurs combinaisons de 10 mg/L peut être compris de 1 à 5000 UFC/mL, en particulier de 5 à 100 UFC/mL, tout particulièrement de 10 à 50 UFC/mL.

De façon avantageuse, une concentration de bactérie dénitrifiante dans ces plages permet une diminution efficace de la concentration en composé nitrite, en composé nitrate ou leurs combinaisons dans l'eau d'exhaure tout en optimisant la quantité de bactérie mise en oeuvre dans l'étape a). Le cout du procédé de l'invention peut alors être optimisé.

Typiquement, le débit de l'eau d'exhaure mise en oeuvre dans l'étape (a) est compris de 10 à 10¹⁰ L/h, en particulier de 10² à 10⁸ L/h, tout particulièrement de 10⁴ à 10⁶ L/h.

Les bactéries dénitrifiantes peuvent être mises en culture dans un bioréacteur jusqu'à attenidre un nombre suffisant pour être injectées dans le flux de l'eau d'exhaure mise en oeuvre dans l'étape (a).

Alternativement, l'étape (a) peut être mise en oeuvre dans le bioréacteur.

Au sens de l'invention, le terme "bioréacteur" désigne un système fermé où les conditions physiques (température, pH, agitation et oxygénation) et chimiques (composition du milieu nutritif) sont régulées de manière précise.

Typiquement, le nombre de bactéries dénitrifiantes présentes dans un bioréacteur de 10L est compris de 10⁹ à 10¹⁶, en particulier de 10¹⁰ à 10¹⁴, plus particulièrement de 10¹¹ à 10¹³.

De façon avantageuse, un nombre de bactéries dénitrifiantes dans ces plages présente un bon compromis entre le nombre de bactéries dénitrifiantes mises en oeuvre dans l'étape a) et la diminution efficace de la concentration en composés nitrites et nitrates dans l'eau d'exhaure.

Le bioréacteur peut être positionné en souterrain. Ainsi, le bioréacteur peut donc être avantageusement mis en oeuvre sur le site du chantier.

Au sens de la présente demande, le terme "composé sulfate" désigne tout composé chimique contenant l'anion sulfate SO₄²⁻.

Typiquement, le composé sulfate peut être choisi parmi le Sulfate de sodium (Na₂SO₄), Sulfate de potassium (K₂SO₄), Sulfate de magnésium (MgSO₄), Sulfate de calcium (CaSO4), Sulfate de zinc (ZnSO₄), Sulfate de cuivre (CuSO₄), Sulfate de fer (FeSO₄), Sulfate de manganèse (MnSO₄), Sulfate d'ammonium (NH₄)₂SO₄, Sulfate de nickel (NiSO₄), Sulfate d'aluminium (Al₂(SO₄)₃), Sulfate de baryum (BaSO₄), Sulfate de plomb (PbSO₄), Sulfate de strontium (SrSO₄), Sulfate de lithium (Li₂SO₄), Sulfate de cadmium (CdSO₄) et Sulfate d'ammonium ((NH₄)₂SO₄), en particulier choisi parmi le Sulfate de sodium (Na₂SO₄), Sulfate de potassium (K₂SO₄), Sulfate de magnésium (MgSO₄), Sulfate de calcium (CaSO₄), Sulfate de zinc (ZnSO₄), Sulfate de cuivre (CuSO₄), Sulfate de fer (FeSO₄) et Sulfate d'ammonium ((NH4)₂SO₄).

Typiquement, la concentration en composé sulfate dans l'eau d'exhaure mise en oeuvre dans l'étape (b) est comprise de 100 mg/L à 1000 mg/L, en particulier de 200 mg/L à 800 mg/L, tout particulièrement de 300 mg/L à 600 mg/L.

Au sens de la présente demande, le terme "plante phytoépuratrice" désigne une plante ayant la capacité d'absorber un ou des composés sulfates, en particulier par ses racines. La plante phytoépuratrice le ou les consomme ensuite pour favoriser sa croissance.

De façon avantageuse, la mise en contact de l'eau d'exhaure avec une plante phytoépuratrice lors de l'étape (b) permet d'obtenir une eau d'exhaure comprenant une concentration réduite en composé sulfate avant son rejet en milieu naturel, ce qui permet d'être en accord avec la réglementation.

La plante phytoépuratrice peut être une plante immergée ou plante émergée.

La plante phytoépuratrice peut être choisie parmi les familles *Poacéae, Brassicaceaes, Polygonaceae, Cyperaceae, Juncaceae, Typhaceae, Araceae, Acanthaceae, Onagraceae* et leurs combinaisons.

Dans la famille de plantes Poacéae, les genres *Phragmites, Phalaris* et leurs combinaisons sont particulièrement adaptés à l'étape (b).

Dans le genre *Phragmites,* l'espèce *Phragmites australis* est particulièrement adaptée à l'étape (b).

Dans le genre *Phalaris,* l'espèce *Phalaris arundinacea* est particulièrement adaptée à l'étape (b).

Dans la famille *Brassicaceaes,* les genres *Barbarea, Nasturtium, Brassica* et leurs combinaisons, plus particulièrement le genre *Barbarea, Brassica* ou leurs combinaisons, sont particulièrement adaptés à l'étape (b).

Dans le genre *Barbarea,* les espèces *Barbarea intermedia, Barbarea vulgaris, Barbarea verna* et leurs combinaisons, plus particulièrement l'espèce *Barbarea intermedia,* sont particulièrement adaptées à l'étape (b).

Dans le genre *Nasturtium,* l'espèce *Nasturtium officinale* est particulièrement adaptée à l'étape (b).

Dans le genre *Brassica,* les espèces *Brassica nigra, Brassica oleracea L.subsp* et leurs combinaisons, plus particulièrement l'espèce *Brassica nigra,* sont particulièrement adaptées à l'étape (b).

Dans la famille *Polygonaceae,* le genre *Rumex* est particulièrement adapté à l'étape (b).

Dans le genre *Rumex,* les espèces *Rumex alpinus, Rumex acetosa, Rumex arifolius* et leurs combinaisons, plus particulièrement l'espèce *Rumex alpinus,* sont particulièrement adaptées à l'étape (b).

Dans la famille *Cyperaceae,* les genres *Schoenoplectus, Carex* et leurs combinaisons sont particulièrement adaptés à l'étape (b).

Dans le genre *Schoenoplectus,* l'espèce *Schoenoplectus lacustris* est particulièrement adaptée à l'étape (b).

Dans la famille de plantes *Juncaceae,* le genre *Juncus* est particulièrement adapté à l'étape (b).

Dans le genre *Juncus,* l'espèce *Juncus effusus spiralis* est particulièrement adaptée à l'étape (b).

Dans la famille *Typhaceae,* le genre *Sparganium* est particulièrement adapté à l'étape (b).

Dans le genre *Sparganium,* l'espèce *Sparganium erectum L.* est particulièrement adaptée à l'étape (b).

Dans la famille *Araceae,* le genre *Cryptocoryne* est particulièrement adapté à l'étape (b).

Dans le genre *Cryptocoryne,* les espèces *Cryptocoryne lutea, Cryptocoryne aponogetifolia, Cryptocoryne beckettii* et leurs combinaisons, plus particulièrement l'espèce *Cryptocoryne Iutea,* sont particulièrement adaptées à l'étape (b).

Dans la famille *Acanthaceae,* le genre *Hygrophila* est particulièrement adapté à l'étape (b).

Dans le genre *Hygrophila,* les espèces *Hygrophila corymbosa, Hygrophila polysperma, Hygrophila difformis* et leurs combinaisons, plus particulièrement l'espèce *Hygrophila corymbosa,* sont particulièrement adaptées à l'étape (b).

Dans la famille *Onagraceae,* le genre *Ludwigia* est particulièrement adapté à l'étape (b).

Dans le genre *Ludwigia,* les espèces *Ludwigia palustris, Ludwigia repens, Ludwigia grandiflora, Ludwigia pepolides* et leurs combinaisons, plus particulièrement les espèces *Ludwigia palustris, Ludwigia repens* et leurs combinaisons, sont particulièrement adaptées à l'étape (b).

Selon un mode de réalisation particulier, la plante phytoépuratrice peut être choisie parmi les espèces *phragmites australis, barbarea intermedia, rumex alpinus, cryptocoryne lutea, ludwigia rupens, ludwigia palustris, hygrophila corymbosa* et leurs combinaisons.

De façon avantageuse, la mise en contact de l'eau d'exhaure avec une plante phytoépuratrice de cette liste permet d'obtenir une eau d'exhaure comprenant une concentration réduite en composé sulfate.

La température de l'eau d'exhaure mise en oeuvre dans l'étape (b) est comprise de 10°C à 50°C, en particulier de 15°C à 45°C, tout particulièrement de 20°C à 40°C.

De façon avantageuse, ces plages de température permettent un fonctionnement efficace l'étape (b) à un cout énergétique optimisé. En effet, la température optimale de fonctionnement, et donc de croissance, de la plante phytoépuratrice est comprises dans ces plages. De plus, il n'est pas nécessaire de refroidir/réchauffer l'eau d'exhaure avant de la mettre en oeuvre dans l'étape (b) car ces plages comprennent la température ambiante et la température à laquelle l'eau d'exhaure est présente dans la roche.

Typiquement, le débit de l'eau d'exhaure mise en oeuvre dans l'étape (b) est compris de 10 à 10¹⁰ L/h, en particulier de 10² à 10⁸ L/h, tout particulièrement de 10⁴ à 10⁶ L/h.

Il est fait référence à la Figure 1.

Un flux d'eau d'exhaure **4a** est conduit dans un premier bassin **1a** dans lequel se trouve un substrat multicouche **2a** sur lequel des plantes phytoépuratrices émergées **3a** poussent. L'eau d'exhaure du flux **4a** est mise en contact avec ces plantes phytoépuratrices émergées **3a** pour être traitée afin d'obtenir une eau d'exhaure comprenant une concentration réduite en composé sulfate. Un flux de cette eau d'exhaure **4b** est acheminé du premier bassin **1a** vers un second bassin **1b** présentant une structure similaire au bassin **1a.** Cette eau d'exhaure est traitée par sa mise en contact avec des plantes phytoépuratrices émergées **3b** du bassin **1b** pour d'obtenir une eau d'exhaure comprenant une concentration encore réduite en composé sulfate. Le flux de cette eau d'exhaure **4c** est ensuite être rejetée dans le milieu naturel.

Ainsi l'étape (b) peut être mise en oeuvre dans un ou plusieurs bassins **1a,1b,** en particulier dans deux bassins **1a,1b.**

Le bassin **1a,1b** a pour avantage d'être un dispositif robuste qui s'adapte aux variations de charges et conditions climatiques, et pour lequel une exploitation régulière reste simple et économique.

Les bassins **1a,1b** peuvent positionnés l'un en dessous de l'autre dans le sens du flux de l'eau d'exhaure, tout particulièrement les bassins **1a,1b** peuvent positionnés l'un en dessous de l'autre en escalier dans le sens du flux de l'eau d'exhaure.

Positionnés les bassins **1a,1b** de cette façon permet avantageusement de limiter l'emprise du procédé selon l'invention sur le chantier et de réduire le temps de traitement grâce à un fonctionnement en continu du procédé.

Le bassin **1a,1b** comprend un substrat permettant à la plante phytoépuratrice de pousser.

Un substrat **2a,2b** multicouche est particulièrement adapté aux plantes phytoépuratrices émergées **3a, 3b.**

Le substrat **2a,2b** multicouche peut être composé, de la surface vers la profondeur du bassin **1a,1b :**
- d'une couche de sable de Fontainebleau dont le diamètre du grain est compris de 0,25 mm à 0,40 mm, optionnellement mélangé à de la silice ultra pure,
- d'une couche de sable provenant de roche naturelle neutre dont le diamètre du grain est compris de 0,6 mm à 1,6 mm, optionnellement dépourvu de calcaire, et
- d'une couche de substrat provenant de roche volcanique dont le diamètre du grain est compris de 20 mm à 40 mm, optionnellement dépourvu de calcaire.

Un substrat composé de terreau, en particulier de terreau nutritif est particulièrement adapté aux plantes phytoépuratrices immergées.

Par exemple, le terreau nutritif peut être une composition comprenant de la terre volcanique et présentant un pH entre 6 et 6.5.

Le nombre de plantes phytoépuratrices **3a,3b** dépend du volume du bassin. Par exemple, le nombre de plante phytoépuratrice **3a,3b** dans un bassin **1a, 1b** dont le volume est de 10L peut être compris de 1 à 100, en particulier de 2 à 10, plus particulièrement de 3 à 4.

De façon avantageuse, un nombre de plante phytoépuratrice **3a,3b** dans ces plages permet une diminution efficace de la concentration en composé sulfate dans l'eau d'exhaure **4** tout en maintenant l'emprise du procédé sur le chantier acceptable.

Selon l'invention, les étapes (a) et (b) peuvent être combinées pour obtenir une eau d'exhaure comprenant une concentration réduite en composé nitrite, composé nitrate, composé sulfate ou leurs combinaisons.

Par exemple, l'eau d'exhaure obtenue à l'étape (a) peut ensuite être mise en oeuvre dans l'étape (b). Ceci peut être réalisé en connectant fluidiquement le bioréacteur tel que décrit ci-dessus au bassin **1a, 1b** tel que décrit ci-dessus.

Alternativement, l'eau d'exhaure obtenue à l'étape (b) peut ensuite être mise en oeuvre dans l'étape (a). Ceci peut être réalisé en connectant fluidiquement le bassin **1a, 1b** tel que décrit ci-dessus avec le bioréacteur tel que décrit ci-dessus.

L'eau d'exhaure comprenant un composé nitrite, un composé nitrate, un composé sulfate ou leurs combinaisons peut alternativement être mise en oeuvre dans l'étape (a) et l'étape (b) pour obtenir une eau d'exhaure purifiée.

Le bassin **1a, 1b** tel que décrit ci-dessus est particulièrement adaptés à la mise en oeuvre des (a) et (b) pour obtenir une eau d'exhaure purifiée à partir de l'eau d'exhaure comprenant un composé nitrite, un composé nitrate, un composé sulfate ou leurs combinaisons.

En effet, le bassin **1a,1b** peut comprendre la plante phytoépuratrice et la bactérie dénitrifiante.

L'ajout de la bactérie dénitrifiante au bassin **1a,1b** ne présente pas de difficultés particulières et permet de réaliser les étapes (a) et (b) en limitant l'emprise du procédé de l'invention sur le site du chantier.

De plus, lorsque la bactérie dénitrifiante est une rhizobactérie, alors son ajout dans le bassin **1a,1b** favorise la croissance de la plante phytoépuratrice et le développement de ladite rhizobactérie. En effet, la rhizobactérie peut convertir l'azote gazeux généré par la dénitrification en ammoniac assimilable par la plante phytoépuratrice. En outre, la plante phytoépuratrice fournit à la rhizobactérie les nutriments essentiels pour sa croissance et son métabolisme, tels que des composés organiques, notamment du carbone, dont la bactérie dénitrifiante a besoin pour se développer.

### Exemples

### Exemple 1 : Traitement bactérien pour éliminer les nitrates

Une eau d'exhaure chargée en composés nitrates (11,16 mg/L) et en composés nitrites (0,7 mg/L) a été traitée par un mélange bactérien constituée à 76% de *Bacillus amyloliquefaciens* & *Bacillus velezensis* et 24% de *Bacillus australimaris* /*pumilus* /*safensis* /*zhangzhouensis* pendant 24h.

La concentration en composés nitrates et la concentration en composés nitrites ont été suivies au cours du temps par mesure quantitative (Tableau 1) (mesure par kit biochimique, 23479 Nitrite/Nitrate Assay Kit, colorimetric de Sigma-Aldrich).

**[Tableau 1]**

| **Eau d'exhaure** | **Concentration en composés nitrates (mg/L)** | **Concentration en composés nitrites (mg/L)** |
|---|---|---|
| Référence | 11,2 | 0,7 |
| Après 2 heures de traitement | 9,2 | 0,4 |
| Après 24 heures de traitement | 7,2 | 0,73 |
| Après 26 heures de traitement | 6,9 | 0,54 |

Comme il est observé dans le Tableau 1, le traitement bactérien permet une baisse de la concentration en composés nitrates dès 2 heures de traitement, et une réduction encore considérable après 24 heures et 26 heures de traitement.
Pour les composés nitrites, la concentration diminue dans un premier temps, puis augmente, avant de rediminuer. Sans vouloir être liés par aucune théorie, les inventeurs sont d'avis que cette hausse peut s'expliquer par la transformation de composés nitrates en composés nitrites avant métabolisation complète des composés nitrites par les bactéries dénitrifiantes et réduction finale en azote gazeux.

L'Exemple 1 met donc en évidence que le traitement de l'eau d'exhaure par le mélange bactérien est très efficace pour diminuer la concentration en composés nitrates et la concentration en composés nitrites dans l'eau d'exhaure.

### Exemple 2 : Traitement de phytoépuration pour éliminer les sulfates

Des essais statiques de réductions de la concentration en composés sulfates sont réalisés dans deux bassins, un bassin contenant des plantes émergées et l'autre bassin contenant des plantes immergées. La concentration en composés sulfates est suivie et les résultats sont présentés dans le Tableau 2.

La liste des plantes épuratrices utilisées dans les bassins est présentée dans le Tableau 3. Les plantes ont été achetées dans une jardinerie. Trois plants de chaque plante testée sont plantés dans des bacs de 10 litres. Le volume d'eau à traiter est de 3 litres.

Le substrat du bassin pour les plantes émergées contient de la surface vers le fond du bassin :
- une couche de 8 cm d'épaisseur de sable de Fontainebleau dont le diamètre des grains est compris de 0,25 mm à 0,40 mm mélangé à de la silice ultra pure
- une couche de 4 cm d'épaisseur de sable de roche naturelle neutre ne contenant pas de calcaire dont le diamètre des grains est compris de 0,6 mm à 1,6 mm.
- un géotextile, et
- un couche de 8 cm constitué de roche volcanique poreuse ne contenant pas de calcaire et dont le diamètre des grains est compris de 20 à 40 mm.

Le substrat du bassin pour les plantes immergées est composé de terreau nutritif qui est une composition avec de la terre volcanique très fertile possédant un pH entre 6 et 6.5.

**[Tableau 2]**

| **Temps de traitement** | **Bassin avec plantes émergées** | **Bassin avec plantes immergées** |
|---|---|---|
| | **concentration en composés sulfates (mg/l)** | **concentration en composés sulfates (mg/l)** |
| 0 heure | 400 | 400 |
| 2 heures | 337 | 280 |
| 3 heures | 303 | 272 |
| 4 heures | 288 | 233 |
| 5 heures | 277 | 225 |
| 6 heures | 261 | 222 |
| 7 heures | 252 | 217 |
| 8 heures | 243 | 191 |
| 9 heures | 209 | 122 |

**[Tableau 3]**

| **Plantes émergées** | **Plantes immergées** |
|---|---|
| *Phragmites australis* (roseau commun) | *Cryptocoryne lutea* (Cryptocoryne valkeri) |
| *Barbarea intermedia* (Barbarée intermédiaire) | *Ludwigia repens* (Jussie rampante) |
| *Rumex alpinus* (oseille des Alpes) | *Ludwigia palustris* (Jussie des marais) |
| | *Hygrophila corymbosa* (hygrophile géante) |

La concentration initiale en composés sulfates de 400 mg/L est diminuée à 200 mg/l après 9 heures.

Ainsi, les plantes contenues dans les bassins en mode émergé et immergé permettent de diminuer efficacement la concentration en composés sulfates dans les eaux d'exhaure.

## Revendications

1. Procédé de traitement d'une eau d'exhaure comprenant un composé nitrite, un composé nitrate, un composé sulfate ou leurs combinaisons,
ledit procédé comprenant l'étape suivante:
(a) mise en contact de l'eau d'exhaure avec une bactérie dénitrifiante pour obtenir une eau d'exhaure comprenant une concentration réduite en composé nitrite, composé nitrate ou leurs combinaisons,
(b) mise en contact de l'eau d'exhaure avec une plante phytoépuratrice (3a,3b) pour obtenir une eau d'exhaure comprenant une concentration réduite en composé sulfate, ou
une combinaison des étapes (a) et (b) pour obtenir une eau d'exhaure comprenant une concentration réduite en composé nitrite, composé nitrate ou leurs combinaisons et une concentration réduite en composé sulfate.

2. Procédé selon la revendication 1 dans lequel le genre de la bactérie dénitrifiante est choisi parmi les genres bactériens *Agrobacterium, Alcaligenes, Aquaspirillum, Azospirillum, Bradyrhizobium, Chromobacterium, Comamonas, Cytophaga, Flavobacterium, Flexibacter, Halobacterium, Haloferax, Hyphomicrobium, Janthinobacterium, Kingella, Neisseria, Ochrobactrum, Paracoccus, Pasteurella, Propionibacterium, Pseudomonas, Rhizobium, Rhodobacter, Roseobacter, Thiobacillus, Thiosphaera, Wolinella, Bacillus* et leurs combinaisons.

3. Procédé selon la revendication 1 ou la revendication 2 dans lequel l'espèce de la bactérie dénitrifiante est choisie parmi *Bacillus amyloliquefaciens, Bacillus velezensis, Bacillus australimaris, Bacillus pumilus, Bacillus safensis, Bacillus zhangzhouensis, Bacillus licheniformis, Bacillus subtilis, Bacillus megaterium, Bacillus cereus* et leurs mélanges.

4. Procédé selon la revendication 3 dans lequel la bactérie dénitrifiante est un mélange comprenant *Bacillus amyloliquefaciens, Bacillus velezensis, Bacillus australimaris, Bacillus pumilus, Bacillus safensis, Bacillus zhangzhouensis, Bacillus licheniformis, Bacillus subtilis, Bacillus thuringiensis, Bacillus cereus, Bacillus megaterium* et *Bacillus cereus.*

5. Procédé selon l'une quelconque des revendications 1 à 4 dans lequel la bactérie dénitrifiante est une rhizobactérie.

6. Procédé selon l'une quelconque des revendications 1 à 5 dans lequel la concentration en composé nitrite, composé nitrate ou leurs combinaisons dans l'eau d'exhaure mise en oeuvre dans l'étape (a) est comprise de 0,5 à 25 mg/L.

7. Procédé selon l'une quelconque des revendications 1 à 6 dans lequel, lors de l'étape (a), la concentration de bactérie dénitrifiante en contact avec une eau d'exhaure comprenant une concentration en composé nitrite, composé nitrate ou leurs combinaisons de 10 mg/L est comprise de 1 à 5000 UFC/mL.

8. Procédé selon l'une quelconque des revendications 1 à 7 dans lequel le débit de l'eau d'exhaure mise en oeuvre dans l'étape (a) est compris de 10 à 10¹⁰ L/h.

9. Procédé selon l'une quelconques des revendications 1 à 8 dans lequel la plante phytoépuratrice (3a,3b) est choisie parmi *les familles Poacéae, Brassicaceaes, Polygonaceae, Cyperaceae, Juncaceae, Typhaceae, Araceae, Acanthaceae, Onagraceae* et leurs combinaisons.

10. Procédé selon l'une quelconque des revendications 1 à 9 dans lequel l'étape (b) est mise en oeuvre dans un ou plusieurs bassins, en particulier dans deux bassins (1a,1b).

11. Procédé selon la revendication 10 dans lequel le nombre de plante phytoépuratrice (3a,3b) dans un bassin (1a, 1b) dont le volume est de 10L est compris de 1 à 100.

12. Procédé selon l'une quelconque des revendications 1 à 11 dans lequel la concentration en composé sulfate dans l'eau d'exhaure mise en oeuvre dans l'étape (b) est comprise de 100 mg/L à 1000 mg/L.

13. Procédé selon l'une quelconque des revendications 1 à 12 dans lequel la température de l'eau d'exhaure mise en oeuvre dans l'étape (b) est comprise de 10°C à 50°C.

14. Procédé selon l'une quelconque des revendications 1 à 13 dans lequel le débit de l'eau d'exhaure mise en oeuvre dans l'étape (b) est compris de 10 à 10¹⁰ L/h.

15. Procédé selon l'une quelconque des revendications 1 à 14 dans lequel :
l'eau d'exhaure obtenue à l'étape (a) est ensuite mise en oeuvre dans l'étape (b),
l'eau d'exhaure obtenue à l'étape (b) est ensuite mise en oeuvre dans l'étape (a), ou
l'eau d'exhaure comprenant un composé nitrite, un composé nitrate, un composé sulfate ou leurs combinaisons est mise en oeuvre dans l'étape (a) et l'étape (b) pour obtenir une eau d'exhaure purifiée.
